## Europäisches Patentamt

## European Patent Office

## Office européen des brevets

(19)

(11) Veröffentlichungsnummer: **0 210 620**
**B1**

(12) **EUROPÄISCHE PATENTSCHRIFT**

(45) Veröffentlichungstag der Patentschrift:
**05.09.90**

(21) Anmeldenummer: **86110358.8**

(22) Anmeldetag: **26.07.86**

(51) Int. Cl.⁵: **B05D 5/06**, B05D 3/12,
B05D 3/06

(54) Verfahren zur Herstellung einer eine texturierte Lackschicht aufweisenden Folie.

(30) Priorität: **31.07.85 DE 3527404**

(43) Veröffentlichungstag der Anmeldung:
**04.02.87 Patentblatt 87/6**

(45) Bekanntmachung des Hinweises auf die Patenterteilung:
**05.09.90 Patentblatt 90/36**

(84) Benannte Vertragsstaaten:
**AT CH DE FR GB IT LI NL SE**

(56) Entgegenhaltungen:
**GB-A- 2 089 819**
**GB-A- 2 137 118**

(73) Patentinhaber: **LEONHARD KURZ GMBH & CO.,**
**Schwabacher Strasse 482, D-8510 Fürth/Bayern(DE)**

(72) Erfinder: **Reinhart, Werner, Dr., Obere Kanalstrasse 8a,**
**D-8500 Nürnberg(DE)**

(74) Vertreter: **LOUIS, PÖHLAU, LOHRENTZ & SEGETH,**
**Kesslerplatz 1 Postfach 3055, D-8500 Nürnberg-1(DE)**

ACTORUM AG

**Beschreibung**

Die Erfindung betrifft ein Verfahren zur Herstellung einer eine texturierte Lackschicht aufweisenden Folie, insbesondere einer Heißprägefolie, bestehend aus einer Trägerfolie, mindestens einer texturierten Lackschicht sowie einer Klebeschicht, wobei eine härtbare Lackschicht nach dem Aufbringen auf die Trägerfolie nur teilweise gehärtet oder getrocknet und dann die teilweise gehärtete oder getrocknete Lackschicht in einem Hub- oder Abrollvorgang mit einer räumlichen Musterung (Texturierung) versehen wird, worauf die mit der Texturierung versehene Lackschicht vollständig gehärtet wird, wobei sowohl die teilweise als auch die vollständige Härtung der härtbaren Lackschicht durch elektromagnetische Strahlung erfolgt (GB-A-2 137 118).

Es gibt gewisse Anwendungsfälle, wo großer Wert darauf gelegt wird, eine vergleichsweise feine, d.h. aus eng beabstandeten oder wenig tiefen Einprägungen bestehende, Texturierung mit großer Genauigkeit in einer Lackschicht anzubringen, trotzdem aber auch zu gewährleisten, daß die Texturierung unabhängig vom Gebrauch der Folie möglichst unverändert erhalten bleibt. Um die Texturierung möglichst lange unverändert zu erhalten, ist es erforderlich, daß die texturierte Lackschicht möglichst hart ist. In eine solche, im allgemeinen nur durch Aushärtung erzielbare Lackschicht kann aber die Texturierung, vor allem wenn es sich um eine sehr feine Musterung handelt, nur schwer, wenn überhaupt eingebracht werden. Eine Oberflächentexturierung ist beispielsweise bei Verwendung eines vollständig vernetzten Schutzlackes unter sinnvollen Produktionsbedingungen überhaupt nicht möglich.

Es war nun bereits bekannt, bei der Herstellung einer Folie, insbesondere einer Prägefolie, derart vorzugehen, daß die Trägerfolie mit der nassen Lackschicht über eine Texturierwalze od. dgl. geführt wird, wobei dann eine Härtung der Lackschicht erfolgt, solange sich diese noch in Kontakt mit der texturierten Oberfläche, z.B. der Oberfläche der Texturierungs-Walze befindet. Bei einem solchen Vorgehen scheidet eine Aushärtung der Lackschicht unter reiner Wärmeeinwirkung aus, weil - um sinnvolle Produktionsgeschwindigkeiten zu erreichen - verhältnismäßig hohe Temperaturen verwendet werden müßten, die in vielen Fällen schon zu einer Aushärtung der Lackschicht vor Einbringung der Musterung führen würden. Es wurde weiterhin bereits versucht, UV-härtbare Lacke einzusetzen, wobei dann die Härtung der texturierten Lackschicht auf der die entsprechende Oberflächenmusterung aufweisenden Unterlage, z.B. Druckwalze, dadurch erfolgte, daß die Lackschicht durch die Trägerfolie hindurch mittels UV-Strahlung beaufschlagt wird. Bei einem derartigen Vorgehen ergibt sich jedoch der Nachteil, daß die Trägerfolie, im allgemeinen eine Polyesterfolie, sämtliche Strahlung unter einer Wellenlänge von etwa 360 nm vollständig absorbiert, so daß nur langwellig wirkende Photoinitiatoren in der Lackschicht aktiviert werden können und nur eine Teilvernetzung erreicht werden kann, was nicht zu einer vollständigen Aushärtung der Lackschicht führt. Man erhält somit nach den bekannten Verfahren nur Folien, deren texturierte Lackschicht lediglich relativ geringe Abriebfestigkeit bzw. Widerstandsfähigkeit gegen mechanische Einflüsse aufweist.

Aus der GB-A 2 137 118 ist bereits ein Verfahren der eingangs erwähnten Art bekannt, bei dem die Härtung der texturierten Lackschicht in zwei Stufen erfolgt, wobei die erste Härtungsstufe vor der Einbringung der Texturierung vorgesehen ist, während die endgültige Aushärtung erst nach der Texturierung erfolgt. Während der ersten Arbeitsstufe liegt dabei eine zwar grundsätzlich ihre Form behaltende, jedoch noch vergleichsweise weiche Lackschicht vor, in die ohne Schwierigkeit auch eine sehr feine Texturierung eingebracht werden kann, ohne daß allzu hohe Arbeitsdrücke angewendet werden müßten oder mit einer starken Abnutzung der Texturierungs-Werkzeuge gerechnet werden müßte. Sobald in der zweiten Arbeitsstufe die vollständige Aushärtung erfolgt ist, erhält die Lackschicht ihre endgültige, vergleichsweise hohe Härte, ohne daß jedoch bei der weiteren Aushärtung mit einer Verformung der Lackschicht gerechnet werden müßte.

Bei dem in der GB-A-21 37 118 beschriebenen Verfahren erfolgt die Aushärtung der Lackschicht mittels Elektronenstrahlen, was einen vergleichsweise hohen apparativen Aufwand erfordert und den Benutzer hinsichtlich der Art der Aushärtung der Lackschicht gewissen Beschränkungen unterwirft. Insbesondere ist es bisher nur bekannt, die Lackschicht zweimal - nämlich zur teilweisen bzw. vollständigen Aushärtung - mit der gleichen elektromagnetischen Strahlung, nämlich Elektronenstrahlung, zu behandeln, also in der zweiten Arbeitsstufe nur die bereits eingeleitete Aushärtung fortzusetzen.

Der Erfindung liegt nun die Aufgabe zugrunde, ein Verfahren zur Herstellung einer Folie mit einer texturierten Lackschicht vorzuschlagen, das auch die Einbringung sehr feiner Muster in die Lackschicht gestattet, zu einer texturierten Lackschicht hoher mechanischer Festigkeit führt und die Möglichkeit bietet, zur Aushärtung elektromagnetische Strahlung unterschiedliche Wellenlänge zu verwenden.

Zur Lösung dieser Aufgabe wird nach der Erfindung bei dem eingangs erläuterten Verfahren vorgeschlagen, daß für die härtbare Lackschicht ein Lack verwendet wird, der zwei bei unterschiedlichen Wellenlängen der elektromagnetischen Strahlung, insbesondere UV-Strahlung, aktivierbare Photoinitiatoren enthält, deren einer die teilweise und deren anderer die vollständige Härtung der härtbaren Lackschicht auslöst.

Bei Verwendung eines derartigen Lackes lassen sich größere Arbeitsgeschwindigkeiten erreichen. Es muß dann für die Vor- und Nachhärtung Strahlung unterschiedlicher Wellenlänge verwendet werden, wobei im allgemeinen für die Vorhärtung Strahlung größerer, für die Nachhärtung Strahlung kleinerer Wellenlänge eingesetzt wird. Hierbei wird die Wirkung der elektromagnetischen Strahlen entsprechender Wellenlänge durch die vorhandenen Photoinitiatoren ausgelöst.

Aus der GB-A-20 89 819 ist zwar bereits eine Beschichtungsmasse bekannt, die durch Kombination von Strahlung und Wärme härtbar ist. In dieser Druckschrift ist jedoch weder ein Hinweis darauf enthalten, eine derartige Beschichtungsmasse als Lack für eine texturierte Lackschicht einer Folie einzusetzen, wobei dann eine zweistufige Aushärtung erfolgt, noch ein Hinweis darauf, daß elektromagnetische Strahlung unterschiedlicher Wellenlänge eingesetzt werden kann, wobei in der Masse dann entsprechend aktivierbare Photoinitiatoren enthalten sind.

Um trotz einer Lackzusammensetzung mit zwei bei unterschiedlichen Wellenlängen aktivierbaren Photoinitiatoren mit einer einheitlichen Strahlungsquelle arbeiten zu können, kann erfindungsgemäß so vorgegangen werden, daß eine Trägerfolie verwendet wird, die für die eine teilweise Härtung auslösende Wellenlänge durchlässig, für die die vollständige Härtung auslösende Wellenlänge dagegen zumindest nahezu undurchlässig ist. Dies gilt beispielsweise für eine Polyester-Folie, die nur für Wellenlängen über ca. 360 nm durchlässig ist. Die Bestrahlung erfolgt dabei zweckmäßig derart, daß die härtbare Lackschicht zur teilweisen Härtung durch die Trägerfolie hindurch, zur vollständigen Härtung dagegen von der der Trägerfolie abgekehrten Seite her bestrahlt wird, weil es dann nicht erforderlich ist, irgendwelche Filter etc. zu verwenden.

Für die härtbare Lackschicht können verschiedene Lacke eingesetzt werden. Als besonders günstig hat es sich jedoch erwiesen, wenn die härtbare bzw. texturierbare Lackschicht von einem Acrylatlack, einem Polyurethanlack oder einem Gemisch dieser Lacke gebildet wird, wobei Acrylatlacke im allgemeinen mittels elektromagnetischer Strahlung, Polyurethanlacke dagegen durch Hitzeeinwirkung härtbar sind.

Sofern eine Härtung unter Wärmeeinwirkung erfolgen soll, kann dies für die vollständige Härtung derart geschehen, daß eine Wärmebehandlung bei einer Temperatur von wenigstens 50°C und während eines Zeitraumes von mindestens 10 Stunden, vorzugsweise bei 70-80°C während 12 Stunden, erfolgt. Diese Wärmebehandlung kann z.B. in einem Trockenschrank an der bereits fertigen, aufgerollten Folie vorgenommen werden, da ja durch die Vorhärtung bereits eine vergleichsweise gute mechanische Stabilisierung der texturierten Lackschicht eintritt.

Weitere Merkmale, Einzelheiten und Vorteile der Erfindung ergeben sich aus der nachstehenden Beschreibung bevorzugter Ausführungsbeispiele der Herstellung von Heißprägefolien gem. der Erfindung.

Bei einem Vorgehen nach der Erfindung wird in an sich bekannter Weise auf eine Trägerfolie, z.B. eine Polyesterfolie, die härtbare Lackschicht, in die die Texturierung eingebracht werden soll, in einem üblichen Druckverfahren aufgebracht. Die Lackschicht wird dann in einem ersten Verfahrensschritt teilweise gehärtet bzw. vernetzt. Hieran anschließend wird dann in einem üblichen Hub- bzw. Abrollverfahren die Texturierung in die Lackschicht eingebracht. An diesen Texturierungsvorgang schließt sich dann ein Nachhärtvorgang an, wobei die Nachhärtung ebenso wie die Vorhärtung durch Wärmeeinwirkung bzw. Einwirkung elektromagnetischer Strahlung, z.B. UV- bzw. Elektronenbestrahlung erfolgen kann. Sobald die texturierte Lackschicht vollstän dig gehärtet ist, kann dann durch die Aufbringung weiterer Schichten, z.B. einer Metallschicht, einer weiteren Lackschicht, einer Klebeschicht etc. die Heißprägefolie in an sich bekannter Weise fertiggestellt werden. Es wäre allerdings auch möglich, die härtbare Lackschicht nach der teilweisen Härtung mit einer Metallisierung zu versehen und die Texturierung dann erst in die mit der Metallisierung versehene Lackschicht einzubringen, worauf die Lackschicht dann endgültig gehärtet wird. Welche der beiden Vorgehensweisen tatsächlich gewählt wird, hängt von der Art der Metallschicht sowie der Texturierung ab. Bei Anbringung einer dickeren Metallschicht wird man diese im allgemeinen nach der Texturierung aufbringen. Sofern die Texturierung sehr fein ist, erscheint es zweckmäßiger, die Metallschicht vor der Einbringung der räumlichen Musterung anzubringen.

Für ein Verfahren gem. der Erfindung können folgende Lacke verwendet werden:

Lack A

Es handelt sich hier um einen mittels UV-Strahlung vorhärtbaren, unter Wärmeeinwirkung nachhärtbaren Lack.

| Zusammensetzung | Gewichts-Teile | Bezeichnung | (Hersteller) |
|---|---|---|---|
| aliphatischer trifunktioneller Acrylester | 1000 | SR 444 | (Sartomer) |
| Reaktivverdünner | 200 | SR 285 | (Sartomer) |
| Siliconmodifiziertes Polyesterharz | 300 | Silico ftal HTL | (Goldschmidt) |
| Hydroxylgruppenhaltiges Acrylharz | 1500 | G-Cure 867 | (Henkel) |
| Photoinitiator (langwellig ansprechend) | 100 | Dorocur 1664 | (Merck) |
| aromatische polyfunktionelle Isocyanatkomponente | 1400 | Desmodur IL | (Bayer) |
| Toluol | 2000 | | |
| Methylethylketon | 500 | | |

Lack B

Es handelt sich hier um einen mittels UV-Strahlung vorhärtbaren, unter Wärmeeinwirkung nachhärtbaren Lack.

| Zusammensetzung | Gewichts-Teile | Bezeichnung | (Hersteller) |
|---|---|---|---|
| aliphatisches Polyester-urethanacrylat | 1000 | Genomer D900 | (Rahn) |
| Reaktivverdünner | 2000 | SR 285 | (Sartomer) |
| aliphatischer trifunktioneller Acrylester | 1500 | SR 444 | (Sartomer) |
| Photoinitiator (langwellig ansprechend) | 80 | Dorocur 1664 | (Merck) |
| dialiphatisches Peroxid (thermischer Initiator) | 50 | Interox DTBP | (Peroxid Chemie) |

Lack C

Es handelt sich hier um einen Lack, bei dem sowohl die teilweise als auch die vollständige Härtung durch Wärmeeinwirkung erfolgt.

| Zusammensetzung | Gewichts-Teile | Bezeichnung | (Hersteller) |
|---|---|---|---|
| hochviskose Nitro-cellulose | 1200 | CollodiumWolle E 330 | (Wolff) |
| hydroxylgruppenhaltiges Acrylharz (langsam vernetzend) | 1000 | Degalan LS 150/300 | (Degussa) |
| hochmolekulares Polymethyl-metacrylat-Harz | 500 | Plexigum M 527 | (Röhm) |
| aromatische polyfunktio-nelle Isocyanatkomponente | 2000 | Desmodur IL | (Bayer) |
| Toluol | 1200 | | |
| Methylethylketon | 5000 | | |

Lack D

Es handelt sich hier um einen Lack, bei dem die teilweise Härtung und vollständige Härtung durch UV-Bestrahlung unterschiedlicher Wellenlänge, beispielsweise mit einer Wellenlänge von mehr bzw. weniger als etwa 360 nm, erfolgt.

| Zusammensetzung | Gewichts-Teile | Bezeichnung | (Hersteller) |
|---|---|---|---|
| hydroxylgruppenhaltiger, aliphatischer pentafunk-tioneller Acrylester | 1000 | SR 399 | (Sartomer) |
| aliphatisches Polyester-urethanacrylat | 1000 | Genomer T1200 | (Rahn) |
| Reaktivverdünner | 1200 | SR 285 | (Sartomer) |
| Photoinitiator (langwellig ansprechend) | 40 | Dorocur 1664 | (Merck) |
| Photoinitiator (kurzwellig ansprechend) | 40 | Irgacune 651 | (Ciba) |

Die Lacke A und B enthalten jeweils Acrylate. Dies bedeutet, daß die teilweise Härtung über eine UV-Bestrahlung mit verhältnismäßig lungwelligem UV (Wellenlänge ≥ 360 nm) erfolgen kann, wobei eine solche Wellenlänge z.B. dadurch erzielt werden kann, daß der Lack durch eine Polyester-Trägerfolie hindurch bestrahlt wird.

Bei dem Lack A wird während der UV-Bestrahlung lediglich der Acrylmonomerenanteil aktiviert. Die endgültige Härtung erfolgt dann durch eine thermische Nachbehandlung im Trockenschrank, z.B. bei einer Temperatur von 70°C währen 12 Stunden. Durch diese thermische Nachbehandlung nach der Texturierung erfolgt eine Vernetzung der Polyurethan-Bestandteile.

Bei Verwendung des Lackes B besteht die Möglichkeit, durch Steuerung der Durchlaufgeschwindigkeit, d.h. der Einwirkungsdauer der UV-Strahlung den Grad der UV-Vernetzung zu beeinflussen.

Wenn eine hohe Durchlaufgeschwindigkeit gewählt wird, ergibt sich eine hohen Kettenabbruchrate und dabei nur eine Teilvernetzung. Für die vollständige Aushärtung erfolgt dann ebenfalls eine thermische Nachbehandlung nach der Texturierung, beispielsweise bei 80°C während 12 Stunden im Trockenschrank. Bei dieser thermischen Nachbehandlung leitet das organische Peroxid als thermischer Initiator die restliche radikalische Acrylgruppenpolymerisation ein.

Bei Verwendung des Lackes C erfolgt die teilweise Härtung rein unter Wärmeeinfluß, wobei die teilweise Härtung wesentlich darauf zurückzuführen ist, daß durch die Wärmeeinwirkung aus dem Lack Lösungsmittel verdampft werden. Nach dem Einbringen der Texturierung erfolgt dann eine Nach härtung unter Wärmeeinfluß, beispielsweise im Trockenschrank bei 80°C während 12 Stunden, die zu einer Aktivierung der Vernetzung unter Polyurethangruppenbildung führt.

Die Besonderheit des Lackes D ist darin zu sehen, daß sowohl eine teilweise als auch die vollständige Vernetzung durch UV-Bestrahlung erfolgen. Zu diesem Zweck ist der Lack D mit zwei bei unterschiedlichen Wellenlängen aktivierbaren Photoinitiatoren versehen. Beispielsweise besteht bei Verwendung des Lackes D die Möglichkeit, durch Bestrahlung des Lackes durch den Polyesterträger hindurch, der UV-Strahlung mit einer Wellenlänge von weniger als etwa 360 nm vollständig absorbiert, lediglich den langwellig ansprechenden Photoinitiator zu aktivieren, was zu einer Teilvernetzung führt, die ausreicht, die Texturierung einbringen zu können. Bestrahlt man dann die texturierte Lackschicht, gegebenenfalls mit der gleichen UV-Lichtquelle, direkt, wirkt die kurzwelligere UV-Strahlung auf die entsprechenden kurzwellig ansprechenden Photoinitiatoren ein, die aktiviert werden und eine vollständige Vernetzung einleiten.

Aus vorstehenden Beispielen ergibt sich, daß in der Wahl der verwendeten Lacke große Freiheit besteht. Insbesondere kann durch die jeweilige Zusammensetzung des Lackes eine leichte Anpassung an die Arbeitsbedingungen des Folien-Herstellungsverfahrens erfolgen. Die Auswahl geeigneter Lacke ist dem Fachmann dabei ohne Schwierigkeit allein aufgrund seiner Kenntnis des Trocknungs- bzw. Härtungsverhaltens der Lacke möglich.

## Patentansprüche

1. Verfahren zur Herstellung einer eine texturierte Lackschicht aufweisenden Folie, insbesondere einer Heißprägefolie, bestehend aus einer Trägerfolie, mindestens einer texturierten Lackschicht sowie einer Klebeschicht, wobei eine härtbare Lackschicht nach dem Aufbringen auf die Trägerfolie nur teilweise gehärtet oder getrocknet und dann die teilweise gehärtete oder getrocknete Lackschicht in einem Hub- oder Abrollvorgang mit einer räumlichen Musterung (Texturierung) versehen wird, worauf die mit der Texturierung versehene Lackschicht vollständig gehärtet wird, wobei sowohl die teilweise als auch die vollständige Härtung der härtbaren Lackschicht durch elektromagnetische Strahlung erfolgt, dadurch gekennzeichnet, daß für die härtbare Lackschicht ein Lack verwendet wird, der zwei bei unterschiedlichen Wellenlängen der elektromagnetischen Strahlung, insbesondere UV-Strahlung, aktivierbare Photoinitiatoren enthält, deren einer die teilweise und deren anderer die vollständige Härtung der härtbaren Lackschicht auslöst.

2. Verfahren nach Anspruch 1, dadurch gekennzeichnet, daß eine Trägerfolie verwendet wird, die für die eine teilweise Härtung auslösende Wellenlänge durchlässig, für die die vollständige Härtung auslösende Wellenlänge dagegen zumindest nahezu undurchlässig ist.

3. Verfahren nach Anspruch 1 und 2, dadurch gekennzeichnet, daß die härtbare Lackschicht zur teilweisen Härtung durch die Trägerfolie hindurch, zur vollständigen Härtung dagegen von der der Trägerfolie abgekehrten Seite her bestrahlt wird.

4. Verfahren nach einem der vorhergehenden Ansprüche, dadurch gekennzeichnet, daß die härtbare Lackschicht von einem Acrylatlack, einem Polyurethanlack oder einem Gemisch dieser Lacke gebildet wird.

5. Verfahren nach einem der Ansprüche 1 bis 4, dadurch gekennzeichnet, daß die vollständige Härtung bei einer Temperatur von wenigstens 50°C und während eines Zeitraumes von mindestens 10 Stunden, vorzugsweise bei 70 bis 80 °C während 12 Stunden, erfolgt.

## Claims

1. A process for the production of a film having a textured lacquer coating, in particular a hot-embossing film, consisting of a support film, at least one textured lacquer coating and an adhesive coating, in which process a curable lacquer coating is, after application to the support film, only partially cured or dried and the partially cured or dried lacquer coating is then provided, in a stroke-type or roller process, with a three-dimensional pattern (texturing), after which the lacquer coating provided with the texturing is completely cured, both the partial and the complete curing of the curable lacquer coating being effected by electromagnetic radiation, characterized in that a lacquer which contains two photoinitiators activatable at different wavelengths of electromagnetic radiation, in particular UV radiation, is used for the curable lacquer coating, one of said photoinitiators initiating the partial curing and the other the complete curing of the curable lacquer coating.

2. A process according to Claim 1, characterized in that a support film is used which is permeable to the wavelength initiating a partial curing but is at least virtually impermeable to the wavelength initiating the complete curing.

3. A process according to Claim 1 and 2, characterized in that the curable lacquer coating is irradiated through the support film for partial curing, but is irradiated from the side facing away from the support film for complete curing.

4. A process according to one of the preceding Claims, characterized in that the curable lacquer coating is formed from an acrylate lacquer, a polyurethane lacquer or a mixture of these lacquers.

5. A process according to one of Claims 1 to 4, characterized in that the complete curing takes place at a temperature of at least 50°C and for a period of at least 10 hours, preferably at 70 to 80°C for 12 hours.

## Revendications

1. Procédé pour l'obtention d'une feuille comportant une couche de laque texturée, en particulier une feuille thermo-imprimée, se composant d'une feuille support, d'au moins une couche de laque texturée, ainsi que d'une couche de colle, du type dans lequel une couche de laque durcissable après dépôt sur la feuille support est partiellement durcie ou séchée, puis la couche de laque ainsi partiellement durcie ou séchée reçoit un motif en relief dans un processus de formation de relief ou en défilement, à la suite de quoi la couche de laque portant cette texturation est complètement durcie, et dans lequel le durcissement, aussi bien partiel que total de la couche de laque est obtenue au moyen d'un rayonnement électromagnétique, caractérisé en ce que pour la couche de laque durcissable, on utilise une laque qui contient deux photo-initiateurs activables par des longueurs d'ondes différentes du rayonnement électro-magnétique, en particulier UV, dont l'un agit sur le durcissement partiel et l'autre sur le durcissement total de la couche de laque durcissable.

2. Procédé selon la revendication 1, caractérisé en ce que l'on utilise une feuille support transparente aux longueurs d'ondes provoquant un durcissement partiel et pratiquement non transparente aux longueurs d'ondes provoquant un durcissement total.

3. Procédé selon les revendications 1 et 2, caractérisé en ce que la couche de laque durcissable est irradiée à travers la feuille support pour son durcissement partiel, tandis qu'elle est irradiée de l'autre côté de la feuille support pour son durcissement total.

4. Procédé selon l'une des revendications précédentes, caractérisé en ce que la couche de laque durcissable consiste en une laque d'acrylate, une laque de polyuréthanne ou un mélange de ces laques.

5. Procédé selon l'une quelconque des revendications 1 à 4, caractérisé en ce que le durcissement total intervient à une température d'au moins 50°C et pendant une durée d'au moins 10 heures, de préférence à 70–80°C pendant 12 heures.